# FASCICULE DE BREVET EUROPEEN

(11) **EP 1 835 224 B1**
(45) Date de publication et mention de la délivrance du brevet: **29.06.2011**
(21) Numéro de dépôt: 07290320.6
(22) Date de dépôt: 14.03.2007
(51) Int. Cl.: F21S 8/10

(54) **Feu de signalisation de véhicule automobile à aspect exterieur uniforme**
Kraftfahrzeugsignalleuchte mit gleichartigem Aussehen
Vehicle taillamp with uniform aspect

(30) Priorité: 16.03.2006 FR 0602298
(43) Date de publication de la demande: 19.09.2007
(73) Titulaire: AUTOMOTIVE LIGHTING REAR LAMPS FRANCE, 89330 Saint-Julien-du-Sault (FR)
(72) Inventeur: Buisson, Alain, 78230 Le mesnil Saint-Denis (FR)
(74) Mandataire: de Haas, Charles

(56) Documents cités:
- EP-A- 1 555 477
- DE-A1- 10 101 795
- DE-A1- 10 311 317
- FR-A1- 2 819 040
- FR-A3- 2 845 457
- US-A1- 2004 130 904

## Description

La présente invention se rapporte à un feu de signalisation de véhicule automobile, notamment à un feu arrière, bien qu'il puisse également s'agir d'un feu avant.

On connaît déjà dans l'art antérieur (par exemple de FR 2 845 457) un feu de signalisation pour véhicule automobile comportant au moins une première source lumineuse agencée de manière à émettre directement ou par l'intermédiaire d'un système optique respectivement de la lumière d'une première couleur ; un écran intermédiaire ou masque, disposé entre la source lumineuse et l'extérieur du feu, l'écran intermédiaire comportant au moins une première ouverture pour le passage de rayons lumineux de la première couleur issus de la première source.

Dans ce système de l'art antérieur, la première source lumineuse est par exemple une source lumineuse de couleur cristal qui traverse un écran vert de manière à fournir, après passage à travers la glace extérieure du feu de couleur rose une lumière de couleur ambre qui correspond à l'indication du fait que le conducteur du véhicule automobile va tourner (fonction clignotant).

Lorsque la source lumineuse n'émet pas, par exemple le jour et tant que le conducteur ne tourne pas, l'observateur situé à l'extérieur du véhicule, à l'arrière de celui-ci, et regardant le feu arrière, voit le feu de la forme et des couleurs du masque, un aspect peu uniforme. Quant à la nuit, lorsque la lanterne est allumée, l'aspect du feu n'est pas non plus uniforme, seule la région du feu au niveau de la lanterne apparaissant rouge brillante, avec un dégradé progressif de cette couleur au fur et à mesure que l'on s'éloigne vers les côtés de la région du feu au niveau de la lanterne.

La présente invention vise à surmonter les inconvénients des feux de signalisation de l'art antérieur en proposant un feu de véhicule automobile, notamment un feu arrière, qui présente un aspect d'une couleur de jour unique, notamment rouge, sensiblement uniforme (lorsque la lanterne du feu n'est pas allumée) et un aspect d'une couleur de nuit unique (lorsque la lanterne est allumée), sensiblement uniforme également, de préférence de la même couleur que le jour.

Suivant l'invention, un feu, notamment arrière, d'un véhicule automobile, comportant au moins une première source lumineuse principale, agencée respectivement pour émettre vers l'extérieur de la lumière d'une première couleur ; et un masque, disposé entre la source lumineuse et l'extérieur du feu, le masque comportant au moins une première ouverture pour le passage de la lumière de la première couleur issue de la première source, est caractérisé en ce que la face du masque tournée vers l'extérieur du masque est colorée d'une deuxième couleur réfléchissante et est en une matière réfléchissante, notamment est métallisée, de manière à réfléchir des rayons lumineux incidents provenant d'au moins deux directions non mutuellement parallèles, en ce qu'un écran auxiliaire, défini par une face intérieure et une face extérieure, séparées par une épaisseur de matériau optique transparent, est interposé entre l'extérieur du feu et le masque, et en ce qu'il est prévu au moins une source de lumière auxiliaire agencée de manière à émettre des rayons lumineux d'une troisième couleur, pour qu'ils se propagent à l'intérieur de l'épaisseur de l'écran auxiliaire, l'écran auxiliaire comportant des cavités qui sont agencées de manière à diffuser au moins en partie les rayons de la troisième couleur vers le masque.

Le jour, l'aspect extérieur du feu, sera ainsi sensiblement uniforme de la couleur unique du masque, sous l'effet du réfléchissement de la lumière du jour par la face réfléchissante du masque, l'écran auxiliaire étant transparent et n'interférant pas avec la lumière réfléchie par le masque. La nuit, la source lumineuse auxiliaire, par exemple rouge, va « remplacer » la lumière du jour. Les rayons issus de la source lumineuse auxiliaire vont se propager dans l'épaisseur de l'écran auxiliaire, et après avoir rencontrer les cavités vont être diffusés vers le masque, puis en être réfléchi en raison de la métallisation, de sorte que l'observateur extérieur verra la nuit le même aspect uniforme du feu que le jour, et également d'une couleur rouge.

Suivant un mode de réalisation préféré, les cavités débouchent à la face intérieure.

L'aspect en profondeur du feu sera également uniforme sur tout le feu, aussi bien le jour que la nuit, et en particulier l'observateur extérieur aura l'impression d'une grande profondeur uniforme du feu.

De préférence les faces de l'écran intermédiaire ont une surface de forme gauche, définissant en chaque point une normale à la surface, et les cavités sont de forme symétrique axiale par rapport à la projection dans le plan de section horizontale de la normale à la surface virtuelle correspondant au prolongement de la surface de l'écran au dessus de la cavité, au point d'intersection de cette surface avec l'axe de la cavité.

On obtient ainsi une très bonne uniformisation de la lumière émise par la source auxiliaire, et ainsi un aspect très uniforme la nuit, sensiblement aussi uniforme que le jour.

Suivant un mode de réalisation préféré de l'invention, les cavités sont de forme telle que la surface de leur section transversale diminue depuis la face de l'écran auxiliaire jusqu'au sommet de la cavité, et notamment ont une forme conique.

Cette forme à section transversale décroissante permet une fabrication particulièrement simple de l'écran intermédiaire, qui notamment peut être fabriqué par électrodéposition. C'est-à-dire que l'empreinte du moule dans lequel on va fabriquer cet écran peut comporter des aspérités, par exemple en forme de cônes, qui sont formées par électrodéposition. Le démoulage de l'écran intermédiaire est facilité par le fait qu'il n'y a pas de forme en contre-dépouille en raison de la forme conique, et ce, malgré la forme incurvée ou gauche de l'écran.

Suivant un mode de réalisation préféré de l'invention, le feu arrière comporte également une glace extérieure.

De préférence, le masque comporte au moins une région en forme de réflecteur entourant une deuxième ouverture en face d'une deuxième source lumineuse principale.

De préférence, la première couleur est cristal et la deuxième couleur est rouge.

De préférence, le matériau optique transparent dans l'épaisseur est une matière plastique transparente, par exemple un polycarbonate ou un poly méthacrylate de méthyle.

De préférence, l'écran auxiliaire est directement voisin du masque.

De préférence le masque est d'une seule couleur, notamment de la deuxième couleur, en particulier rouge.

Suivant un mode de réalisation préféré de l'invention, il est prévu trois sources lumineuses principales, une première source lumineuse pour le clignotant et/ou le recul, une source lumineuse pour la signalisation du freinage et une source lumineuse pour la lanterne.

Suivant un mode de réalisation préféré de l'invention, la source lumineuse auxiliaire est constituée de plusieurs LED.

Suivant un mode de réalisation préféré de l'invention, le pourtour extérieur de l'écran auxiliaire comporte un épaulement.

On obtient ainsi un soulignage du contour du feu.

Aux dessins donnés à titre d'exemple, on décrit maintenant un mode de réalisation préféré de l'invention.

La Figure 1 représente un mode de réalisation d'un feu arrière suivant l'invention ; et

La Figure 2 représente une vue en coupe longitudinale d'une cavité de diffusion d'un deuxième écran.

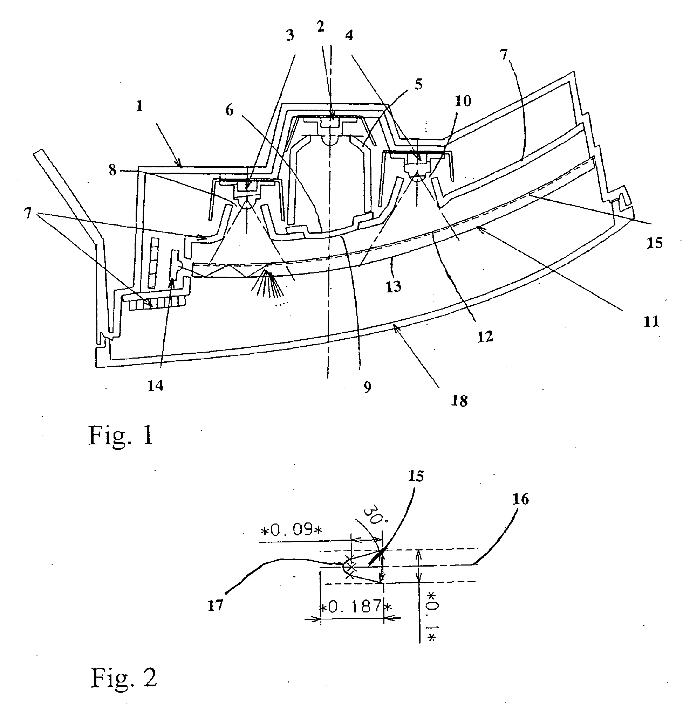

La Figure 1 représente de manière schématique un feu arrière d'un véhicule automobile. Celui-ci comporte, enfermées dans une platine 1, trois sources lumineuses, à savoir une lampe 2, des LED 3 et des LED 4. La lampe 2 est de couleur blanche. Un réflecteur 5 est agencé de manière à réfléchir la lumière issue de la lampe 2 pour l'envoyer à travers une vitre 6 de couleur verte. Cette lampe est actionnée en général lorsque le véhicule tourne. Les LED 3 et 4 émettent de la lumière rouge. A la place des lampes on peut prévoir des LED et vice versa.

Un masque 7 est disposé entre l'extérieur et les sources lumineuses. Il comporte des ouvertures 8, 9 et 10. Par l'ouverture 8, les LED 3 peuvent émettre de la lumière vers l'extérieur. Par l'ouverture 10, les LED 4 peuvent émettre de la lumière vers l'extérieur. Sur l'ouverture 9, est adaptée la vitre 6 de couleur verte(ou de couleur cristal si la lampe 2 est remplacée par une LED), de sorte qu'une lumière de couleur verte (ou ambre si la lampe est remplacée par une LED) sorte de l'ouverture 9 lorsque la lampe 2 est allumée. Cette lumière de couleur verte ou ambre (cas d'une LED), en passant à travers la glace 18 de couleur rose donnera au final une lumière de couleur ambre (fonction clignotant). Dans des régions entourant les deux ouvertures 8 et 10 faisant face aux LED 3 et 4, le masque 7 a une forme de réflecteur pour ainsi permettre une diffusion des lumières issues des LED 3 et 4. La surface du côté extérieur du masque 7 est métallisée et est de couleur rouge, de sorte que la lumière émise par les LED 3 et 4 apparaît ainsi rouge brillante pour l'observateur extérieur. Les LED 3 peuvent par exemple être l'indicateur de freinage et les LED 4 la lanterne. On peut également prévoir que les LED 3 et 4 servent en même temps pour les deux signalisations de freinage et de lanterne, sous la commande d'un système électronique qui délivre aux LED des intensités différentes, par exemple plus élevée pour le freinage.

Un écran 11 auxiliaire est disposé entre l'extérieur et le masque 7, en étant directement voisin de celui ci. Cet écran 11 a une face intérieure 12 et une face extérieure 13. Ces deux faces sont séparées d'une épaisseur sensiblement constante, d'un matériau sensiblement transparent, par exemple une matière plastique en polycarbonates ou poly met-acrylate de méthyle. Cependant, au niveau du pourtour de la face extérieure 13, il est prévu un épaulement 14. Ainsi, l'écran 11 est entouré par une partie 15 d'extrémité en forme de disque annulaire ayant une épaisseur plus petite que l'épaisseur entre la face 12 intérieure et la face 13 extérieure au centre de l'écran 11.

Des LED 14 auxiliaires, émettant de la couleur rouge, sont disposées latéralement par rapport à l'écran 11. Cette LED 14 est agencée de manière à émettre des rayons lumineux dans l'épaisseur de l'écran 11, entre les deux faces 12 et 13. Ces rayons lumineux vont se propager à l'intérieur de l'épaisseur de l'écran 11 par réflexions successives sur les deux faces. Lors de cette propagation, une partie au moins de ces rayons lumineux vont être diffusés vers le masque 7.

La face 12 intérieure de l'écran 11 comporte des cavités 15. Ces cavités ont notamment la forme d'un cône, comme représenté à la Figure 2. Cette cavité 15 est symétrique par rapport à son axe 16. La surface de la section transversale perpendiculairement à l'axe 16 de la cavité décroît depuis le niveau de la face 12 jusqu'au fond 17 de la cavité 15. L'axe 16 correspond à la projection dans le plan de section horizontale (plan de la figure 1) de la normale (ou perpendiculaire) à la face 12 de forme gauche de l'écran 11, au niveau de l'intersection de l'axe 16 avec la surface virtuelle correspondant au prolongement de la surface 12 au dessus de l'ouverture de la cavité.

Une glace 18 ferme la platine 1 à l'extérieur.

Le jour, les rayons lumineux du soleil, provenant de plusieurs directions, pénètrent à l'intérieur du feu, traverse l'écran 11 sensiblement transparent et se réfléchissent contre le masque 7, pour ainsi donner en retour un aspect de couleur rouge brillant au feu.

Les rayons lumineux provenant sensiblement de toutes les directions, l'aspect du feu est bien uniforme. Dans le même temps, en raison des ouvertures 8, 9 et 10, lorsqu'une des lampes 2, 3 ou 4 est actionnées, cela est vu par un observateur extérieur.

La nuit, la majeure partie de la lumière émise par les LED 14 auxiliaires est transmise de l'écran auxiliaire sur toute sa largeur (la direction horizontale à la figure 1) vers l'extérieur par les cavités. Le reste de la lumière est transmise vers le masque, est réfléchie par celui ci et traverse l'écran 11, vers l'extérieur, de sorte que l'observateur extérieur voit encore un feu rouge bien uniforme, comme de jour. Une impression de grande profondeur uniforme est obtenue.

Les cavités sont des cônes d'une hauteur comprise entre 0,05mm et 0,25mm. Le demi angle du cône est de préférence compris entre 20 et 45°. De préférence, les cavités sont réparties sur la surface 12 de manière uniforme, notamment suivant des rangées alternativement décalées. Le pas dans une rangée peut être compris entre 1 et 3 mm, tandis que la distance inter-rangée peut être de 1 à 3 mm égalememt.

## Revendications

1. Feu, notamment arrière, d'un véhicule automobile, comportant au moins une première source (2, 3, 4) lumineuse principale, agencée respectivement pour émettre vers l'extérieur de la lumière d'une première couleur ; et un masque (7), disposé entre la source lumineuse et l'extérieur du feu, le masque comportant au moins une première ouverture pour le passage de la lumière de la première couleur issue de la première source, la face du masque tournée vers l'extérieur du masque étant colorée d'une deuxième couleur réfléchissante et étant en une matière réfléchissante, notamment étant métallisée, de manière à réfléchir des rayons lumineux incidents provenant d'au moins deux directions non mutuellement parallèles ; **caractérisé en ce qu'**un écran (11) auxiliaire, défini par une face (12) intérieure et une face (13) extérieure, séparées par une épaisseur de matériau optique transparent, est interposé entre l'extérieur du feu et le masque ; et **en ce qu'**il est prévu au moins une source (14) de lumière auxiliaire agencée de manière à émettre des rayons lumineux d'une troisième couleur, pour qu'ils se propagent à l'intérieur de l'épaisseur de l'écran auxiliaire, l'écran auxiliaire comportant des cavités qui sont agencées de manière à diffuser au moins en partie les rayons de la troisième couleur vers le masque,
tandis que les cavités sont de forme symétrique axiale par rapport à la projection dans le plan de section horizontale de la normale à la surface virtuelle correspondant au prolongement de la surface de l'écran au-dessus de la cavité, au point d'intersection de cette surface avec l'axe de la cavité, et
tandis que les cavités sont de forme telle que la surface de leur section transversale diminue depuis la face de l'écran auxiliaire jusqu'au fond de la cavité.

2. Feu suivant la revendication 1, **caractérisé en ce que** les faces (12, 13) de l'écran intermédiaire ont une surface de forme gauche, définissant en chaque point une normale à la surface.

3. Feu suivant la revendication 1 ou 2, **caractérisé en ce que** les cavités (15) ont une forme conique.

4. Feu suivant la revendication 1, 2 ou 3, **caractérisé en ce que** le feu arrière comporte également une glace (18) extérieure.

5. Feu suivant l'une des revendications 1 à 4, **caractérisé en ce que** le masque comporte au moins une région en forme de réflecteur entourant une deuxième ouverture en face d'une deuxième source lumineuse principale.

6. Feu suivant l'une des revendications 1 à 5, **caractérisé en ce que** la première couleur est cristal et la deuxième couleur est rouge.

7. Feu suivant l'une des revendications 1 à 6, **caractérisé en ce que** le pourtour extérieur de l'écran auxiliaire comporte un épaulement.

8. Feu suivant l'une des revendications 1 à 7, **caractérisé en ce que** le masque est d'une seule couleur, notamment de la deuxième couleur, en particulier rouge.

9. Feu suivant l'une des revendications 1 à 8, **caractérisé en ce qu'**il est prévu au moins deux sources lumineuses principales, notamment une première source lumineuse pour le clignotant et/ou le recul, une source lumineuse pour la signalisation du freinage et une source lumineuse pour la lanterne.

10. Feu suivant l'une des revendications 1 à 9, **caractérisé en ce que** la source lumineuse auxiliaire est constituée de plusieurs LED.

11. Feu suivant l'une des revendications précédentes, **caractérisé en ce que** les cavités débouchent à la face (12) intérieure.

## Claims

1. A motor vehicle lamp, in particular a rear lamp, including at least one first main light source (2, 3, 4), arranged respectively for outward emission of the light of a first colour; and a mask (7), arranged between the light source and the outside of the lamp, the mask including at least one first opening to allow the light of the first colour coming from the first source to pass, the face of the mask turned towards the outside of the mask being coloured a second, reflective, colour and being made of a reflective material, in particular metallized, in order to reflect incident light beams originating from at least two directions that are not parallel to each other; **characterized in that** an auxiliary light screen (11), defined by an inner face (12) and an outer face (13), separated by a thickness of transparent optical material, is interposed between the outside of the lamp and the mask; and **in that** at least one auxiliary light source (14) is provided so as to emit light beams of a third colour, so that they are propagated within the thickness of the auxiliary light screen, the auxiliary light screen including cavities arranged in order to at least partially diffuse the beams of the third colour towards the mask,
the cavities having an axial symmetrical shape with respect to the projection in the horizontal sectional plane of the normal to the virtual surface corresponding to the extension of the surface of the light screen above the cavity, at the point of intersection of this surface with the axis of the cavity, and
the cavities being shaped such that the surface of their cross-section reduces from the face of the auxiliary light screen to the base of the cavity.

2. The lamp according to claim 1, **characterized in that** the faces (12, 13) of the intermediate light screen have a non-linear surface, defining a normal to the surface at each point.

3. The lamp according to claim 1 or 2, **characterized in that** the cavities (15) have a conical shape.

4. The lamp according to claim 1, 2 or 3, **characterized in that** the rear lamp also includes an outer cover (18).

5. The lamp according to one of claims 1 to 4, **characterized in that** the mask includes at least one region in the form of a reflector surrounding a second opening opposite a second main light source.

6. The lamp according one of claims 1 to 5, **characterized in that** the first colour is clear and the second colour is red.

7. The lamp according to one of claims 1 to 6, **characterized in that** the outer periphery of the auxiliary light screen includes a shoulder.

8. The lamp according to one of claims 1 to 7, **characterized in that** the mask is a single colour, in particular the second colour, in particular red.

9. The lamp according to one of claims 1 to 8, **characterized in that** at least two main light sources are provided, in particular a first light source for the indicator and/or reversing light, a light source for the brake light and a light source for the position lamp.

10. The lamp according to one of claims 1 to 9, **characterized in that** the auxiliary light source is constituted by several LEDs.

11. The lamp according to one of the previous claims, **characterized in that** the cavities open onto the inner face (12).

## Patentansprüche

1. Leuchte, insbesondere Schlussleuchte, eines Kraftfahrzeugs, mit mindestens einer ersten Hauptlichtquelle (2, 3, 4), die jeweils so angeordnet ist, dass sie Licht einer ersten Farbe nach außen abgibt; und einer Maske (7), die zwischen der Lichtquelle und dem Äußeren der Leuchte angebracht ist, wobei die Maske mindestens eine erste Öffnung besitzt, durch die das Licht der ersten Farbe aus der ersten Quelle hindurchtreten kann, wobei die zum Äußeren der Maske hin zeigende Fläche der Maske mit einer zweiten reflektierenden Farbe gefärbt und aus einem reflektierenden Werkstoff beschaffen und insbesondere metallisiert ist, so dass einfallende Lichtstrahlen aus mindestens zwei nicht zueinander parallelen Richtungen reflektiert werden; **dadurch gekennzeichnet, dass** ein Hilfsschirm (11), der durch eine Innenfläche (12) und eine Außenfläche (13) festgelegt ist, welche durch eine Schicht optisch transparenten Werkstoff getrennt sind, zwischen dem Äußeren der Leuchte und der Maske platziert ist; und **dadurch**, dass mindestens eine Hilfslichtquelle (14) vorgesehen ist, die so angeordnet ist, dass sie Lichtstrahlen einer dritten Farbe ausgibt, damit sich diese im Inneren der Stärke des Hilfsschirms ausbreiten, wobei der Hilfsschirm Vertiefungen besitzt, die so angeordnet sind, dass die Strahlen der dritten Farbe zumindest teilweise zur Maske hin geleitet werden,
wobei die Vertiefungen eine axialsymmetrische Form aufweisen bezüglich der Projektion in der waagrechten Schnittebene der Normalen zur virtuellen Oberfläche, welche der Verlängerung der Oberfläche des Schirms oberhalb der Vertiefung, am Schnittpunkt zwischen dieser Oberfläche und der Achse der Vertiefung, entspricht und
wobei die Vertiefungen eine Form haben, die derart ist, dass die Fläche ihres Querschnitts von der Oberfläche des Hilfsschirms zum Boden der Vertiefung hin abnimmt.

2. Leuchte gemäß Anspruch 1, **dadurch gekennzeichnet, dass** die Flächen (12, 13) des Zwischenschirms eine bogenförmige Oberfläche haben, deren Raumkurve in jedem Punkt eine Normale zur Oberfläche festlegt.

3. Leuchte gemäß Anspruch 1 oder 2, **dadurch gekennzeichnet, dass** die Vertiefungen (15) eine konische Form haben.

4. Leuchte gemäß Anspruch 1, 2 oder 3, **dadurch gekennzeichnet, dass** die Schlussleuchte auch eine Außenscheibe (18) besitzt.

5. Leuchte gemäß einem der Ansprüche 1 bis 4, **dadurch gekennzeichnet, dass** die Maske mindestens eine Region in Form eines Reflektors besitzt, der eine zweite Öffnung umgibt, die einer zweiten Hauptlichtquelle gegenüber liegt.

6. Leuchte gemäß einem der Ansprüche 1 bis 5, **dadurch gekennzeichnet, dass** die erste Farbe kristall und die zweite Farbe rot ist.

7. Leuchte gemäß einem der Ansprüche 1 bis 6, **dadurch gekennzeichnet, dass** der Außenumfang des Hilfsschirms einen Bund aufweist.

8. Leuchte gemäß einem der Ansprüche 1 bis 7, **dadurch gekennzeichnet, dass** die Maske eine einzige Farbe hat, insbesondere die zweite Farbe, namentlich rot.

9. Leuchte gemäß einem der Ansprüche 1 bis 8, **dadurch gekennzeichnet, dass** mindestens zwei Hauptlichtquellen vorgesehen sind, insbesondere eine erste Lichtquelle für das Blinken und/oder das Rückwärtsfahren, eine Lichtquelle zum Signalisieren des Bremsens und eine Lichtquelle für das Schlusslicht.

10. Leuchte gemäß einem der Ansprüche 1 bis 9, **dadurch gekennzeichnet, dass** die Hilfslichtquelle aus mehreren LEDs besteht.

11. Leuchte gemäß einem der vorstehenden Ansprüche, **dadurch gekennzeichnet, dass** die Vertiefungen zur Innenfläche (12) hin geöffnet sind.
